# EUROPEAN PATENT APPLICATION

(11) **EP 2 056 576 A1**
(43) Date of publication of application: **06.05.2009**
(21) Application number: 07119768.5
(22) Date of filing: 31.10.2007
(51) Int. Cl.: H04M 1/725

(54) **Improved sound in a conference communication session**

(71) Applicant: Sony Ericsson Mobile Communications AB, 221 88 Lund (SE)
(72) Inventor: Sassi, Jari, S-22657, Lund (SE)
(74) Representative: Valea AB

(57) **Abstract**

According to the present invention a first main communication device (10) at a first site includes a first network interface (32) associated with a communication network, a local wireless interface (36) for interfacing with a number of satellite communication devices (18), a network communication unit (34) for communicating over the first network interface (32), a local communication unit (38) for communication with satellite communication devices (18) via the local wireless interface (36), and a control unit (40). The control unit (40) receives sound picked up by a group of satellite communication devices (18) at the first site (S1) via the local wireless interface (36), combines this received sound, and orders the network communication unit (34) to send the combined sound via the network interface (32) to a second main communication device at a second site as sound in the conference communication session provided by the first main communication device (10).

## Description

### TECHNICAL FIELD OF THE INVENTION

The present invention relates to the field of conference communication sessions over communication networks. More particularly the present invention relates to a method, a first main communication device and a computer program product for engaging in a conference communication session via a communication network between a first main communication device provided in a first site and at least one second main communication device provided in a second site.

### DESCRIPTION OF RELATED ART

Conference communication equipment, such as conference phones, today include a telephone equipped with one or more speakers and often having one or two microphones. When such conference equipment is to be put in use, the microphones may then be placed on a table in a first site and record the sound from participants in the conference, which participants then normally sit around this table. They thus sit at various distances to such microphones and therefore the sound being picked up may vary considerably from participant to participant.

In this type of scenario it may therefore be hard to pick up the sound clearly from all the participants at this first site, which means that participants in the conference at a second site communicating with the first site over a communication network may have difficulties in hearing what is being said. This can lead to misunderstandings and reduce the efficiency of such a conference, which may be highly undesirable.

There is therefore a need for improving on this situation.

### SUMMARY OF THE INVENTION

The present invention is directed towards proving improved sound from a first site to a second site in a conference communication session.

The present invention does this through realising the possibilities that exist in the cellular phone field. In this field network communication devices are often provided with short range communication abilities. In this filed there furthermore exists a lot of accessories to such devices and also being provided with short range communication abilities. Both phones as well as many such accessories are also provided with sound pick up capabilities. According to the present invention this is put to use in improving the sound transmitted in a conference communication session from one site to another.
providing assisted reception of a set of data for wireless communication devices.

A first aspect of the present invention concerns a method for engaging in a conference communication session via a communication network between a first main communication device provided in a first site and at least one second main communication device provided in a second site comprising the steps of:
receiving, in the first main communication device, sound picked up by a group of satellite communication devices at the first site via a local wireless interface,
combining this received sound, and
sending the combined sound to the at least one second main communication device via the network as sound in the communication session provided by the first main communication device.

A second aspect of the present invention includes the features of the first aspect, further comprising the step of sending an invitation to join the conference communication session to satellite communication devices that are within range of the local wireless interface, receiving an acceptance from a number of satellite communication devices via the local wireless interface and forming the group of satellite communication devices from satellite communication devices that have accepted the invitation.

A third aspect of the present invention includes the features of the second aspect, wherein the acceptance includes a key and further comprising the step of comparing the received key with a conference key and forming the group only of satellite communication devices that have sent a key matching the conference key.

A fourth aspect of the present invention includes the features of the first aspect, further comprising the step of distributing, from the first main communication device, sound received from the second main communication device in the conference communication session to the group of satellite communication devices via the local wireless interface.

A fifth aspect of the present invention includes the features of the first aspect, further comprising the step of only combining sound from a communication device at the first site during a time interval in the conference communication session where sound above a sound pressure level threshold is picked up by the communication device.

A sixth aspect of the present invention includes the features of the first aspect, further comprising the step of receiving speech indicators from satellite communication devices at the first site and only combining sound from satellite communication devices during a time interval in the conference communication session for which a corresponding speech indicator has been received.

A seventh aspect of the present invention includes the features of the first aspect, further comprising the step of receiving pieces of attendant specifying data from the group of satellite communication devices, forming a set of attendant specifying data including pieces of received attendant specifying data and sending the set of attendant specifying data to the second main communication device via the network.

An eighth aspect of the present invention includes the features of the seventh aspect, wherein the set of attendant specifying data also includes a piece of attendant specifying data associated with the first main communication device.

A ninth aspect of the present invention includes the features of the seventh aspect, wherein a piece of attendant specifying data is an identity of the communication device associated with the local wireless interface.

A tenth aspect of the present invention includes the features of the seventh aspect, wherein a piece of attendant specifying data is an electronic business card associated with a corresponding communication device.

An eleventh aspect of the present invention includes the features of the first aspect, wherein the step of combining also includes combining the received sound with sound picked up by the first main communication device.

A twelfth aspect of the present invention concerns first main communication device provided in a first site for engaging, via a communication network, in a conference communication session with at least one second main communication device provided in a second site comprising:
a first network interface associated with the communication network,
a local wireless interface for interfacing with a number of satellite communication devices, a network communication unit for communicating over the first network interface,
a local communication unit for communication with satellite communication devices via the local wireless interface, and
a control unit configured to receive sound picked up by a group of satellite communication devices at the first site via the local wireless interface,
combine this received sound, and
order the network communication unit to send the combined sound via the network interface to the at least one second main communication device as sound in the conference communication session provided by the first main communication device.

A thirteenth aspect of the present invention includes the features of the twelfth aspect, wherein the control unit is further configured to send an invitation to join the conference communication session to satellite communication devices that are within range of the local wireless interface, receive an acceptance from a number of satellite communication devices via the local wireless interface and form the group of satellite communication devices from satellite communication devices that have accepted the invitation.

An fourteenth aspect of the present invention includes the features of the thirteenth aspect, wherein the acceptance includes a key and the control unit is further configured to compare the received key with a conference key and form the group only of satellite communication devices that have sent a key matching the conference key.

A fifteenth aspect of the present invention includes the features of the twelfth aspect, wherein the control unit is further configured to distribute sound received from the second main communication device in the conference communication session to the group of satellite communication devices via the local wireless interface.

A sixteenth aspect of the present invention includes the features of the twelfth aspect, wherein the control unit is further configured to only combine sound from a communication device at the first site during a time interval in the conference communication session where sound above a sound pressure level threshold is picked up by the communication device.

A seventeenth aspect of the present invention includes the features of the twelfth aspect, wherein the control unit is further configured to receive speech indicators from satellite communication devices at the first site and to only combine sound from satellite communication devices during a time interval in the conference communication session for which a corresponding speech indicator has been received.

An eighteenth aspect of the present invention includes the features of the twelfth aspect, wherein the control unit is further configured to receive pieces of attendant specifying data from the group of satellite communication devices, form a set of attendant specifying data including pieces of received attendant specifying data and send the set of attendant specifying data to the second main communication device via the network interface.

A nineteenth aspect of the present invention includes the features of the eighteenth aspect, wherein a piece of attendant specifying data is an identity of the communication device associated with the local wireless interface.

A twentieth aspect of the present invention includes the features of the eighteenth aspect, wherein a piece of attendant specifying data is an electronic business card associated with a corresponding communication device.

An twenty-first aspect of the present invention includes the features of the twelfth aspect, further comprising a sound pick-up unit and where the control unit when being configured to combine sound is configured to combine the received sound with sound picked up by the sound pick up unit.

A twenty-second aspect of the present invention includes the features of the twelfth aspect, wherein it is a portable communication device.

A twenty-third aspect of the present invention includes the features of the twenty-second aspect, wherein it is a wireless communication device.

A twenty-fourth aspect of the present invention includes the features of the twenty-third aspect, wherein it is cellular phone.

A twenty-fifth aspect of the present invention concerns a computer program product for engaging in a conference communication session via a communication network between a first main communication device provided in a first site and at least one second main communication device provided in a second site and comprising:
computer program code on a computer readable medium, configured to make the first main communication device perform, when the program code is loaded in the first main communication device,
receive sound picked up by a group of satellite communication devices at the first site via a local wireless interface,
combine this received sound, and
order the sending of the combined sound to the at least one second main communication device via the network as sound in the conference communication session provided by the first main communication device.

The invention has the following advantages. Through the invention, it is possible to combine and transfer sound from the various satellite communication devices. This sound will have a better quality than the sound picked up by a central microphone of the first main communication device, since microphones of the satellite communication devices may be held closer to the mouths of their users. This enables conference attendants at the second site to more clearly hear what is being said at the first site. The invention can furthermore be provided without special conference equipment. It can use existing cellular phone technology. The units that are required for implementing the present invention normally exist in today's cellular phones and accessories to such phones. Therefore additional costs for implementing the present invention are low.

It should be emphasized that the term "comprises/comprising" when used in this specification is taken to specify the presence of stated features, steps or components, but does not preclude the presence or addition of one or more other features, steps, components or groups thereof.

### BRIEF DESCRIPTION OF THE DRAWINGS

The present invention will now be described in more detail in relation to the enclosed drawings, in which:
fig. 1 schematically shows a number of satellite communication devices communicating with a first main communication device at a first site, which first main communication device is in turn communicating with a second main communication device at a second site via a communication network,
fig. 2 shows a front view of a first main communication device according to the present invention in the form of a cellular phone,
fig. 3 shows a block schematic of the relevant parts of the first main communication device and a satellite communication device,
fig. 4 shows a flow chart of a number of method steps taken in a method according to the present invention for engaging in a conference communication session between the first main communication device and the second main communication device,
fig. 5 shows a flow chart of a number of further method steps taken in a method according to the present invention for engaging in the conference communication session between the first main communication device and the second main communication device, and fig. 6 shows a CD ROM disc on which program code for executing a method according to the present invention is provided.

### DETAILED DESCRIPTION OF EMBODIMENTS

The present invention is directed towards providing a better quality of sound sent from a first site to a second site in a conference communication session.

Such sessions are being set up via a communication network, which may be a computer network (using VoiP), a PSTN network, a wireless network or any other suitable network where conference communication sessions including sound can be set up.

In an exemplifying description of the present invention this network will be a wireless wide area network. As such it can be a GSM network, a GPRS network, a CDMA network, a UMTS network or an LTE network. These are merely examples of networks where the present invention may be implemented. Therefore other communication networks can be used according to the principles of the present invention.

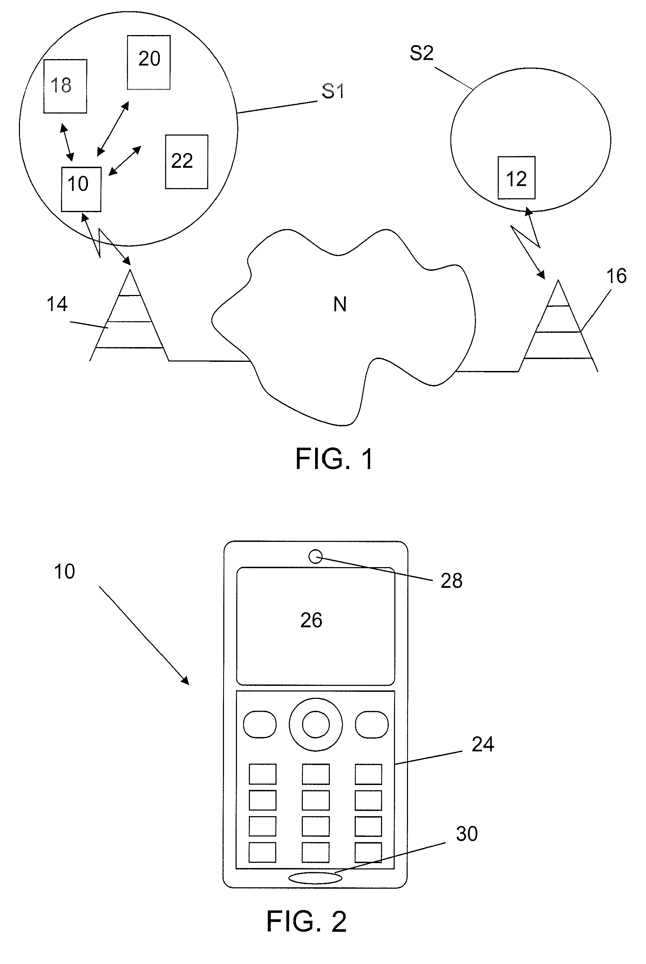

Fig. 1 schematically shows a first main communication device 10 at a first site S1 communicating with a second main communication device 12 at a second site S2 via a communication network N. In the example given here both the first and second main communication devices 10 and 12 are cellular phones or devices having cellular phone capabilities, why the devices 10 and 12 communicate with each other via base stations 14 and 16 provided in the network N. The first and second main communication devices 10 and 12 are here involved in a conference communication session including sound. The first main communication device 10 is furthermore equipped with a local wireless interface for communication according to a local wireless communication protocol, which may be a short-range communication protocol for directly interfacing with other devices, like Bluetooth. However, the invention is not limited to Bluetooth, but other techniques can be used, such as WLAN. Via this local wireless interface the first main communication device 10 is communicating with a first, second and third satellite communication device 18, 20, 22 at the first site S1. The users of these satellite communication devices 18, 20, 22 as well as a user of the first main communication device 10 are all participating in the conference communication session. It should here be realised that also the second main communication device 12 may in a similar manner be communicating with satellite communication devices. However, this is by no means a requirement.

The first main communication device 10 is in this example a wireless communication device and more particularly a portable communication device. In the preferred embodiment the device 10 is a cellular phone. Such a device is shown in a front view in fig. 2. Such a phone 10 is normally provided with a display 26 and a user input unit in the form of a keypad 24 including a number of keys. It also includes a speaker 28 and a sound pick up unit, here in the form of a microphone 30. It should here be realised that the device 10 may as an alternative be a special conference device placed on a table and provided with a microphone and one or more large speakers. It is also possible that a cellular phone is connected to an external speaker, for instance via a system connector, in order to provide a better loudspeaker than the one provided in the phone. The keypad 24 is used for entering information such as selecting of functions and responding to prompts and the display 26 is used for displaying functions and prompts to a user of the phone 10. As is indicated above, a cellular phone is just one example of a communication device in which the invention may be implemented. The invention can for instance also be used in other portable communication devices, such as in a PDA (personal digital assistant), a palm top computer or a lap top computer as long as the device has ability to communicate via the network N. The device may also be a regular fixed phone connected to a PSTN.

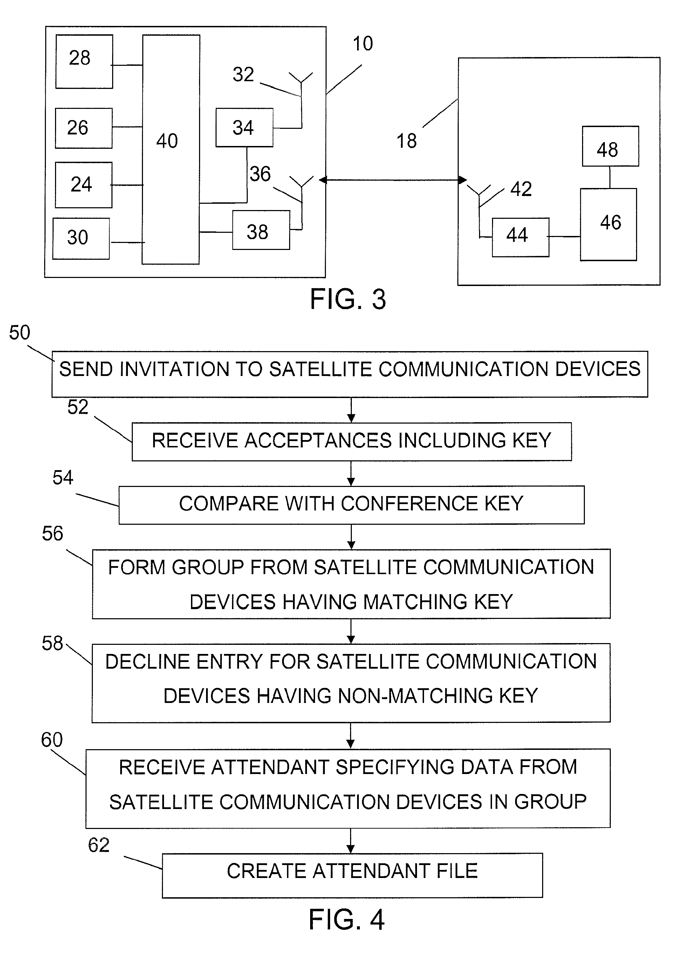

Fig. 3 shows a block schematic of the first main communication device 10 when communicating with the first satellite communication device 18. The first main communication device 10 includes the above described keypad 24, display 26, speaker 28 and microphone 30. These entities 24, 26, 28, 30 are in the first main communication device 10 connected to a first control unit 40. The first control unit 40 is in turn connected to a network communication unit 34 and to a first local communication unit 38. The network communication unit 34 is in turn connected to a wireless network interface in the form of a first antenna 32 and the first local communication unit 38 is in turn connected to a first local wireless interface 36 for communication with other wireless communication devices locally at the first site, of which the first satellite communication device 18 is one. The local wireless interface 36 is here an antenna. In this example the communication is furthermore a direct local communication. The network communication unit 34 is here a radio communication unit, for instance in the form of an ASIC circuit comprising functionality for communication in the wireless wide area network N, such as modulators, demodulators, power amplifiers etc. The local communication unit 38 is in one variation of the present invention an interface for directly interfacing with other communication devices at the first site. This unit 38 may be a local wireless communication unit. In this embodiment it is a Bluetooth communication unit and the local wireless interface 36 is thus a Bluetooth antenna. In the same way, the first satellite communication device 18 includes a second control unit 46 connected to a second local communication unit 44, which in turn is connected to a second local wireless interface 42 for communication with the first main communication device 10. Also the second local communication unit 44 is here a Bluetooth communication unit and the second local wireless interface 42 is thus here also a Bluetooth antenna. Here the first satellite communication device 18 includes a sound pick up unit in the form of a microphone 48 connected to the second control unit 46. The first satellite communication device 18 may also include user input units in the form of a keypad or buttons and a display as well as head phones or speakers. The first satellite communication device 18 may be another cellular phone. However it should be realised that it can be another type of device as well, such as a head set or a hands-free device. These are typical accessories which are able to communicate with cellular phones.

Now a first part of the present invention will be described with reference being made to previously described fig. 1 - 3 as well as to fig 4, which shows a flow chart of a first number of method steps taken in a method according to the present invention for engaging in a conference communication session between the first main communication device and the second main communication device.

It all starts with the user of the first main communication device 10 in the first site S1 wanting to engage a conference communication session with the second main communication device 12 in the second site S2. The engaging in such a session from the first site S1 is controlled by the first control unit 40, which may be provided as a part of an ordinary phone communication function in the first main communication device 10. The first control unit 40 may receive a selection to start a conference communication session from the user of the first communication device 10 via the keypad 24 or may receive a phone call from the second main communication device 12. When this happens the first control unit 40 asks the user, using the display 26, if any other persons are to join the conference at the first site S1, and may receive a selection by the user, via the keypad 24, that others are to be invited. The first control unit 40 then orders the local communication unit 38 to send out an invitation to join the conference via the second antenna 36, step 50. This invitation is sent to all satellite communication devices in the first site S1, which is made up of the area that the second antenna 36 covers.

Thereafter the first control unit 40 awaits reception of acceptances. The invitation is for instance received by the second control unit 46 of the first satellite communication device 18 via the third antenna 42 and the second local communication unit 44. The invitation may thus be sent out to all persons having a satellite communication device being in range of the second antenna 36, which may be when such a person is in a conference room or is entering a conference room. This invitation may then be presented by the second control unit 46 to the user of the first satellite communication device 18 via a display (not shown). As one or more satellite communication devices accept to join the conference, which may be done through their satellite communication devices pairing with the first main communication device 10, they send acceptances. An acceptance may here include a key, which a user of a satellite communication device may have to enter via a button, keypad or other suitable input means. Thus the second control unit 46 may receive an indication from the associated user of the first satellite communication device 18 that he/she wants to join the conference. This indication is here accompanied by a key, which key may have been provided orally from the user of the first main communication device 10 or in another suitable secure manner to the user of the first satellite communication device 18. The second control unit 46 then sends an acceptance including said key to the first local communication unit 38 of the first main communication device 10 via the second and third antennas 36, 42 and the second local communication unit 44.

When the first local communication unit 38 receives acceptances and associated keys from satellite communication devices within range, it forwards these acceptances and keys to the first control unit 40. The first control unit 40 thereafter compares the received keys with a conference key, step 54. Of all the devices that have accepted to join the conference, the first control unit 40 then forms a group of satellite communication devices, which group is made up of those that have provided the correct key, i.e. a key that match the conference key, step 56. As an example the first, second and third satellite communication devices 18, 20, 22 have here all provided the correct key. Any possible other satellite communication devices that have provided the wrong key, i.e. a non-matching key, are declined entry into the session, step 58. The first control unit 40 may thus in this case order the first local communication unit 38 to send a decline message via the second antenna 36. Thereafter the first control unit 40 receives pieces of attendant specifying data from all satellite communication devices in the group, step 60, and forms a set of attendant specifying data, here in the form of an attendant file, step 62, based on this received attendant specifying data.

Attendant specifying data is here requested and received via the first local wireless interface 38. A piece of attendant specifying data may in its simplest form be an identity associated with the local wireless interface and local communication unit of the satellite communication device. In for instance Bluetooth it is possible for a user to himself provide such a piece of attendant specifying data through naming the device for this communication. This name is thus in this case the piece of attendant specifying data. In case satellite communication devices are cellular phones, the attendant specifying data can be contact information provided in relation to the satellite communication device. This may for instance be an electronic business card, a so-called VCARD, which may include data about the user of the satellite communication device, like name, address, title and employer as well as an image of this user. It is here also possible that attendant specifying data is not requested by the first control unit 40, but is received automatically, especially if the device name is used. In the attendant file that is created also the corresponding attendant specifying data associated with the main communication device 10 may be included, which may thus be the device name or an electronic business card associated with the user of the first main communication device 10.

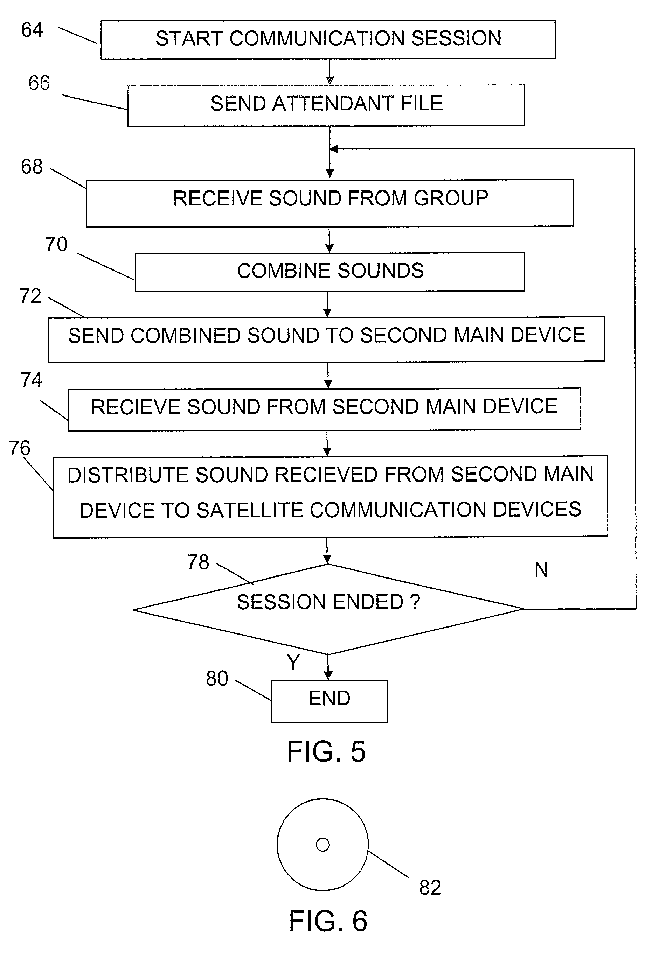

When this has been done it is now possible for all the users of the satellite communication devices in the group as well as the user of the first main communication device at the first site S1 to engage in a conference communication session with corresponding people at the second site S2 communicating using the second main communication device 12. A second part of the present invention outlining how this may be performed will now be described with reference also being made to fig. 5, which shows a flow chart of a number of further method steps taken in a method according to the present invention for engaging in the conference communication session between the first main communication device 10 and the second main communication device 12.

The conference communication session is here started, step 64. If the conference communication session is initiated by the first main communication device 10, the control unit 40 here then orders the network communication unit 34 to place a call to the second main communication device 12 via the network N. In case the conference communication session is initiated by the second main communication device 12, a call from that device may here be accepted by the first control unit 40. For this conference communication session sound is exchanged over the network N between the first and second main communication devices 10, 12. In this session the attendant file is furthermore sent from the first control unit 40 of the first main communication device 10 to the second main communication device 12 using the network communication unit 34 and the first antenna 32, step 66. This file may be sent before sound is being sent or while sound is being sent. Depending on the type of network involved the file may be transferred in various ways. In case of a GSM network it may be provided in a message such as an SMS, while for other types of networks it may be sent as a data message in the session or as a data message transferred separate from the conference communication session. In this way it is possible for the second main communication device 12 to present the attendants at the first site S1 to the attendants at the second site S2. As mentioned above sound is transferred. In such transfer, the microphones of the satellite communication devices at the first site S1 pick up sound from their respective users. This sound is, when the first satellite communication device 18 is taken as an example, transferred from the microphone 48 to the second local communication unit 44 under the control of the second control unit 46. From there the sound is transferred to the first control unit 40 of the first main communication device 10, via the antennas 36 and 42 and the first local communication unit 40. In the first main communication device 10 also the microphone 30 may pick up sound, which is likewise transferred to the first control unit 40. In this way the first control unit 40 receives sound from the group, step 68.All these various sounds are then combined in the first control unit 40, step 70, and then sent to the second main communication device 12 using the network communication unit 34 and first antenna 32. There is thus one connection from the first main communication device 10 at the first site S1 to the second main communication device 12 at the second site S2, over which connection the combined sounds from the first main communication device and all the satellite communication devices in the first group is sent. This combined sound is thus sent as the sound in the conference communication session that is provided by the first main communication device 10.

There is furthermore a second connection from the second main communication device 12 to the first main communication device 10, which includes the sound picked up at the second site S2. This sound from the second site S2 is thus received by the first control unit 40 via the first antenna 32 and network communication unit 34, step 74. This sound is then distributed by the first control unit 40 to the satellite communication devices 18, 20 and 22 of the group via the first local communication unit 38 and the second antenna 36, step 76. A satellite communication device, such as device 18, may then receive the distributed sound via the third antenna 42 and second local communication unit 44. This received sound is then sent to a speaker of the satellite communication device 18 under the control of the second control unit 46.

The first control unit 40 continually investigates if the session is ended. If it is not, step 78, sound is continued to be received from the group, step 68, combined, step 70, and sent to the second main communication device 12, step 72. Sound received from the second main communication device 12, step 74, is also distributed to the satellite communication devices, step 76. If however the session is ended, step 78, the method is ended through breaking the connection over the network N, step 80.

In this way it is possible to combine and transfer sound from the various satellite communication devices. This sound will have a better quality than the sound picked up by a central microphone of the first main communication device, since the microphones of the satellite communication devices may be held closer to the mouths of their users. This enables the conference attendants at the second site to more clearly hear what is being said at the first site. By using a technology like Bluetooth it is furthermore possible to have as many as ten to fifteen satellite communication devices participating in the above described way. A cellular phone in this way becomes a conference equipment that uses satellite communication devices as microphones. There is no need for special conference equipment. Since the units that are required for implementing the present invention normally exist in today's cellular phones and accessories to such phones, the additional costs for implementing the present invention are low.

In many communication devices, such as cellular phones, noise is added to the sound being picked up by a microphone. This is done in order for a receiving party to understand that the connection has not been broken even though there is silence. However, when sound is combined in the above described way, there is a risk that also this noise is being combined, which may lead to a high noise level, especially if there are many satellite communication devices involved. According to some variations of the present invention the sound from attendants that are not speaking is muted. This can be done through only combining sound from a device during a time interval in the conference communication session when the user in question is actually speaking. This can be done by a satellite communication device, or the control unit of the first main communication device, if the sound picked up by the microphone of the satellite communication device in question is above a sound pressure level threshold. If the sound is below this threshold the sound picked up by a satellite communication device will not be combined, which results in a lowering of the noise level. This principle may of course also be applied to the sound being picked up by the microphone of the first main communication device. As an alternative it is possible that the control unit of a satellite communication device generates a first speech indicator. Such a first speech indicator can be automatically generated based on the above described sound pressure level being exceeded. It is also possible that such a first speech indicator is generated by the user of the satellite communication device through pressing on a button or a key. The first speech indicator is in this case transferred from the satellite communication device to the first main communication device, the control unit of which then only includes the sound associated with such a first speech indicator in the combining during a time interval associated with this first speech indicator. A first speech indicator may be followed by a silence indicator, which may also be automatically generated when the sound pressure level being picked up falls below the above mentioned threshold or when the user actuates a button or key. The sound from a particular satellite communication device is then only being combined during a time interval in the conference communication session for which a corresponding speech indicator has been received. This principle may of course also here be applied to the sound being picked up by the microphone of the first main communication device.

The control units in the communication devices according to the present invention are preferably provided in the form of one or more processors with corresponding memory containing the program code for performing their functions. This program code can also be provided on one or more computer program products such as a computer readable medium like a CD ROM disc 82 as depicted in fig. 6, which will perform their functions when loaded into a communication device having suitable processing capabilities. Naturally other types of computer readable mediums can be provided for this, like for instance a removable memory like a memory stick. The computer program product can also be provided as software, which is downloaded remotely from a server either outside or inside the cellular network or be downloaded via a computer like a PC to which the main communication device is temporarily connected.

There are a number of further variations that can be made to the present invention in addition to those already mentioned. The provision of a key by a satellite communication device and a comparison with a conference key may be omitted. Also the provision of attendant specifying data may be omitted. The sound from the second site need furthermore not be provided to the satellite communication devices of the first site, but can instead be emitted through a speaker associated with the first main communication device. It is also possible to receive an attendant file from the second site and distribute it to the satellite communication devices of the first site or provide it only through a display associated with the first main communication device. In relation to muting of communication devices at the first site it is possible that the first control unit keeps track of from which communication device sound in a given time interval is being combined and generates a second speech indicator, which second speech indicator would point to a piece of attendant specifying data in the attendant file. This second speech indicator can then be transferred to the second main communication device as the sound associated with this piece of attendant specifying data is being sent to the second main communication device. The second main communication device may then present an indication of which of the conference attendants being provided in the attendant file that is speaking. This can be done through providing additional information in relation to a piece of attendant specifying data, for instance through highlighting a name in a group of names presented on a screen or display. It is also possible that any sound picked up by the first main communication device is not being part of the combining being performed, but that this device is only involved in the control of the conference communication session. The conference communication session was above described in relation to sound. It is also possible that the conference communication session includes images and then perhaps video images. In this case it is furthermore possible to receive video images from the satellite communication devices and apply the same principles of combining that were used in relation to sound pressure level thresholds and/or first speech indicators. In this scenario only images associated with one first speech indicator or sound pressure level threshold being exceeded is provided in the first connection between the first and second main communication devices in a given time interval. In the description that was made above there were only two sites involved in the conference communication session. It should be realised that it is also possible with more sites being engaged in the session. There are countless other possible variations that can be made to the present invention that have not been described here. Therefore the present invention is only to be limited by the accompanying claims.

## Claims

1. Method for engaging in a conference communication session via a communication network (N) between a first main communication device (10) provided in a first site (S1) and at least one second main communication device (12) provided in a second site (S2) comprising the steps of:
receiving (68), in said first main communication device, sound picked up by a group of satellite communication devices (18, 20, 22) at said first site (S1) via a local wireless interface (36),
combining (70) this received sound, and
sending (72) the combined sound to the at least one second main communication device (12) via the network (N) as sound in the communication session provided by the first main communication device (10).

2. Method according to claim 1, further comprising the step of sending (50) an invitation to join the conference communication session to satellite communication devices (18, 20, 22) that are within range of the local wireless interface (36), receiving (52) an acceptance from a number of satellite communication devices (18, 20, 22) via the local wireless interface (36) and forming (56) said group of satellite communication devices from satellite communication devices that have accepted the invitation.

3. Method according to claim 2, wherein the acceptance includes a key and further comprising the step of comparing (54) the received key with a conference key and forming (56) said group only of satellite communication devices that have sent a key matching the conference key.

4. Method according to any previous claim, further comprising the step of distributing (76), from the first main communication device (10), sound received (74) from the second main communication device (12) in the conference communication session to the group of satellite communication devices via the local wireless interface (36).

5. Method according to any previous claim, further comprising the step of only combining sound from a communication device at the first site (S1) during a time interval in the conference communication session where sound above a sound pressure level threshold is picked up by said communication device.

6. Method according to any previous claim, further comprising the step of receiving speech indicators from satellite communication devices at the first site (S1) and only combining sound from satellite communication devices during a time interval in the conference communication session for which a corresponding speech indicator has been received.

7. Method according to any previous claim, further comprising the step of receiving (60) pieces of attendant specifying data from the group of satellite communication devices, forming (62) a set of attendant specifying data including pieces of received attendant specifying data and sending (66) the set of attendant specifying data to the second main communication device via the network.

8. Method according to claim 7, wherein the set of attendant specifying data also includes a piece of attendant specifying data associated with the first main communication device.

9. Method according to claim 7 or 8, wherein a piece of attendant specifying data is an identity of the communication device associated with the local wireless interface.

10. Method according to claim 7 or 8, wherein a piece of attendant specifying data is an electronic business card associated with a corresponding communication device.

11. Method according to any previous claim, wherein the step of combining (70) also includes combining said received sound with sound picked up by the first main communication device (10).

12. A first main communication device (10) provided in a first site (S1) for engaging, via a communication network (N), in a conference communication session with at least one second main communication device (12) provided in a second site (S2) comprising:
a first network interface (32) associated with the communication network (N),
a local wireless interface (36) for interfacing with a number of satellite communication devices (18, 20, 22),
a network communication unit (34) for communicating over the first network interface (32),
a local communication unit (38) for communication with satellite communication devices (18, 20, 22) via the local wireless interface (36), and
a control unit (40) configured to receive sound picked up by a group of satellite communication devices (18, 20, 22) at said first site (S1) via said local wireless interface (36),
combine this received sound, and
order the network communication unit (34) to send the combined sound via the network interface (32) to the at least one second main communication device (12) as sound in the conference communication session provided by the first main communication device (10).

13. A first main communication device (10) according to claim 12, wherein the control unit (40) is further configured to send an invitation to join the conference communication session to satellite communication devices (18, 20, 22) that are within range of the local wireless interface (36), receive an acceptance from a number of satellite communication devices (18, 20, 22) via the local wireless interface (36) and form said group of satellite communication devices from satellite communication devices that have accepted the invitation.

14. A first main communication device (10) according to claim 13, wherein the acceptance includes a key and the control unit (40) is further configured to compare the received key with a conference key and form said group only of satellite communication devices that have sent a key matching the conference key.

15. A first main communication device (10) according to any of claims 12 - 14, wherein the control unit (40) is further configured to distribute sound received from the second main communication device (12) in the conference communication session to the group of satellite communication devices via the local wireless interface (36).

16. A first main communication device (10) according to any of claims 12 - 15, wherein the control unit (40) is further configured to only combine sound from a communication device at the first site (S1) during a time interval in the conference communication session where sound above a sound pressure level threshold is picked up by said communication device.

17. A first main communication device (10) according to any of claims 12 - 16, wherein the control unit (40) is further configured to receive speech indicators from satellite communication devices at the first site (S1) and to only combine sound from satellite communication devices during a time interval in the conference communication session for which a corresponding speech indicator has been received.

18. A first main communication device (10) according to any of claims 12 - 17, wherein the control unit (40) is further configured to receive pieces of attendant specifying data from the group of satellite communication devices, form a set of attendant specifying data including pieces of received attendant specifying data and send the set of attendant specifying data to the second main communication device via the network interface.

19. A first main communication device (10) according to claim 18, wherein a piece of attendant specifying data is an identity of the communication device associated with the local wireless interface.

20. A first main communication device (10) according to claim 18, wherein a piece of attendant specifying data is an electronic business card associated with a corresponding communication device.

21. A first main communication device (10) according to any of claims 12 - 17, further comprising a sound pick-up unit (30) and where the control unit (40) when being configured to combine sound is configured to combine said received sound with sound picked up by the sound pick up unit (30).

22. A first main communication device (10) according to any of claims 12 - 21, wherein it is a portable communication device.

23. A first main communication device (10) according to claim 22, wherein it is a wireless communication device.

24. A first main communication device (10) according to claim 23, wherein it is cellular phone.

25. A computer program product (82) for engaging in a conference communication session via a communication network (N) between a first main communication device (10) provided in a first site (S1) and at least one second main communication device (12) provided in a second site (S2) and comprising:
computer program code on a computer readable medium, configured to make the first main communication device (10) perform, when said program code is loaded in the first main communication device (10),
receive sound picked up by a group of satellite communication devices (18, 20, 22) at said first site via a local wireless interface (36),
combine this received sound, and
order the sending of the combined sound to the at least one second main communication device (12) via the network (N) as sound in the conference communication session provided by the first main communication device (10).

## Amended claims

### Amended claims in accordance with Rule 137(2) EPC.

**1.** Method for engaging in a conference communication session via a communication network (N) between a first main communication device (10) provided in a first site (S1) and at least one second main communication device (12) provided in a second site (S2) comprising the steps of:
receiving (68), in said first main communication device, sound picked up by a group of satellite communication devices (18, 20, 22) at said first site (S1) via a local wireless interface (36),
combining (70) this received sound, and
sending (72) the combined sound to the at least one second main communication device (12) via the network (N) as sound in the communication session provided by the first main communication device (10), wherein the sound from attendants of said conference communication session that are not speaking is muted.

**2.** Method according to claim 1, further comprising the step of sending (50) an invitation to join the conference communication session to satellite communication devices (18, 20, 22) that are within range of the local wireless interface (36), receiving (52) an acceptance from a number of satellite communication devices (18, 20, 22) via the local wireless interface (36) and forming (56) said group of satellite communication devices from satellite communication devices that have accepted the invitation.

**3.** Method according to claim 2, wherein the acceptance includes a key and further comprising the step of comparing (54) the received key with a conference key and forming (56) said group only of satellite communication devices that have sent a key matching the conference key.

**4.** Method according to any previous claim, further comprising the step of distributing (76), from the first main communication device (10), sound received (74) from the second main communication device (12) in the conference communication session to the group of satellite communication devices via the local wireless interface (36).

**5.** Method according to any previous claim, further comprising the step of only combining sound from a communication device at the first site (S1) during a time interval in the conference communication session where sound above a sound pressure level threshold is picked up by said communication device.

**6.** Method according to any previous claim, further comprising the step of receiving speech indicators from satellite communication devices at the first site (S1) and only combining sound from satellite communication devices during a time interval in the conference communication session for which a corresponding speech indicator has been received.

**7.** Method according to claim 6, wherein said speech indicator is automatically generated when a sound pressure level threshold is exceeded.

**8.** Method according to claim 6, wherein said speech indicator is generated by a user of a satellite communication device (18, 20, 22) by pressing a button or a key.

**9.** Method according to any of claims 6-8, wherein said speech indicator is followed by a silence indicator that is automatically generated when the sound pressure level being picked up falls below a sound pressure level threshold or when by a user of a satellite communication device (18, 20, 22) presses a button or a key.

**10.** Method according to any previous claim, further comprising the step of receiving (60) pieces of attendant specifying data from the group of satellite communication devices, forming (62) a set of attendant specifying data including pieces of received attendant specifying data and sending (66) the set of attendant specifying data to the second main communication device via the network.

**11.** Method according to claim 10, wherein the set of attendant specifying data also includes a piece of attendant specifying data associated with the first main communication device.

**12.** Method according to claim 10 or 11, wherein a piece of attendant specifying data is an identity of the communication device associated with the local wireless interface.

**13.** Method according to claim 10 or 11, wherein a piece of attendant specifying data is an electronic business card associated with a corresponding communication device.

**14.** Method according to any of claims 10-13, further comprising keeping track of which communication device sound in a given time interval is being combined and generating a second speech indicator that points to a piece of attendant specifying data in the attendant file and transferring the second speech indicator to a main communication device as the sound associated with said piece of attendant specifying data is being sent to the main communication device,

**15.** Method according to any previous claim, wherein the step of combining (70) also includes combining said received sound with sound picked up by the first main communication device (10).

**16.** A first main communication device (10) provided in a first site (S1) for engaging, via a communication network (N), in a conference communication session with at least one second main communication device (12) provided in a second site (S2) comprising:
a first network interface (32) associated with the communication network (N),
a local wireless interface (36) for interfacing with a number of satellite communication devices (18, 20, 22),
a network communication unit (34) for communicating over the first network interface (32),
a local communication unit (38) for communication with satellite communication devices (18, 20, 22) via the local wireless interface (36), and
a control unit (40) configured to
receive sound picked up by a group of satellite communication devices (18, 20, 22) at said first site (S1) via said local wireless interface (36), combine this received sound, and
order the network communication unit (34) to send the combined sound via the network interface (32) to the at least one second main communication device (12) as sound in the conference communication session provided by the first main communication device (10) and
mute the sound from attendants of said conference communication session that are not speaking.

**17.** A first main communication device (10) according to claim 16, wherein the control unit (40) is further configured to send an invitation to join the conference communication session to satellite communication devices (18, 20, 22) that are within range of the local wireless interface (36), receive an acceptance from a number of satellite communication devices (18, 20, 22) via the local wireless interface (36) and form said group of satellite communication devices from satellite communication devices that have accepted the invitation.

**18.** A first main communication device (10) according to claim 17, wherein the acceptance includes a key and the control unit (40) is further configured to compare the received key with a conference key and form said group only of satellite communication devices that have sent a key matching the conference key.

**19.** A first main communication device (10) according to any of claims 16 - 18, wherein the control unit (40) is further configured to distribute sound received from the second main communication device (12) in the conference communication session to the group of satellite communication devices via the local wireless interface (36).

**20.** A first main communication device (10) according to any of claims 16 - 19, wherein the control unit (40) is further configured to only combine sound from a communication device at the first site (S1) during a time interval in the conference communication session where sound above a sound pressure level threshold is picked up by said communication device.

**21.** A first main communication device (10) according to any of claims 16 - 20, wherein the control unit (40) is further configured to receive speech indicators from satellite communication devices at the first site (S1) and to only combine sound from satellite communication devices during a time interval in the conference communication session for which a corresponding speech indicator has been received.

**22.** A first main communication device (10) according to claim 21, configured to automatically generate said speech indicator when a sound pressure level threshold is exceeded.

**23.** A first main communication device (10) according to claim 21, configured to generate said speech indicator when a user of a satellite communication device (18, 20, 22) presses a button or a key.

**24.** A first main communication device (10) according to any of claims 21-23, configured to generate a silence indicator following said speech indicator which is automatically generated when the sound pressure level being picked up falls below a sound pressure level threshold or when by a user of a satellite communication device (18, 20, 22) presses a button or a key.

**25.** A first main communication device (10) according to any of claims 16 - 24, wherein the control unit (40) is further configured to receive pieces of attendant specifying data from the group of satellite communication devices, form a set of attendant specifying data including pieces of received attendant specifying data and send the set of attendant specifying data to the second main communication device via the network interface.

**26.** A first main communication device (10) according to claim 25, wherein a piece of attendant specifying data is an identity of the communication device associated with the local wireless interface.

**27.** A first main communication device (10) according to claim 25, wherein a piece of attendant specifying data is an electronic business card associated with a corresponding communication device.

**28.** A first main communication device (10) according to any of claims 25-27, further configured to keep track of which communication device sound in a given time interval is being combined and to generate a second speech indicator that points to a piece of attendant specifying data in the attendant file and transfer the second speech indicator to a second main communication device (12) as the sound associated with said piece of attendant specifying data is being sent to the second main communication device (12).

**29.** A first main communication device (10) according to any of claims 19 - 28, further comprising a sound pick-up unit (30) and where the control unit (40) when being configured to combine sound is configured to combine said received sound with sound picked up by the sound pick up unit (30).

**30.** A first main communication device (10) according to any of claims 19 - 29, wherein it is a portable communication device.

**31.** A first main communication device (10) according to claim 30, wherein it is a wireless communication device.

**32.** A first main communication device (10) according to claim 31, wherein it is cellular phone.

**33.** A computer program product (82) for engaging in a conference communication session via a communication network (N) between a first main communication device (10) provided in a first site (S1) and at least one second main communication device (12) provided in a second site (S2) and comprising:
computer program code on a computer readable medium, configured to make the first main communication device (10) perform, when said program code is loaded in the first main communication device (10),
receive sound picked up by a group of satellite communication devices (18, 20, 22) at said first site via a local wireless interface (36),
combine this received sound,
order the sending of the combined sound to the at least one second main communication device (12) via the network (N) as sound in the conference communication session provided by the first main communication device (10) and mute the sound from attendants of said conference communication session that are not speaking.
